(19) **Europäisches Patentamt European Patent Office Office européen des brevets**

(11) **EP 2 592 804 B1**

(12) **EUROPEAN PATENT SPECIFICATION**

(45) Date of publication and mention
of the grant of the patent:
**25.12.2019 Bulletin 2019/52**

(51) Int Cl.:
*H04L 27/26* (2006.01)     *H04L 5/00* (2006.01)

(21) Application number: **13151940.7**

(22) Date of filing: **27.10.2006**

(54) **Method and apparatus for achieving flexible bandwidth using variable guard bands**

Verfahren und Vorrichtung zum Erreichen einer flexiblen Bandbreite unter Verwendung variabler Schutzbänder

Procédé et appareil permettant d'obtenir une largeur de bande souple au moyen de bandes de garde variables

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.10.2005 US 731028 P**
**25.10.2006 US 552966**

(43) Date of publication of application:
**15.05.2013 Bulletin 2013/20**

(62) Document number(s) of the earlier application(s) in accordance with Art. 76 EPC:
**06836587.3 / 1 941 691**

(73) Proprietor: **Qualcomm Incorporated**
**San Diego, CA 92121-1714 (US)**

(72) Inventors:
• **Khandekar, Aamod**
**San Diego, CA California 92121-1714 (US)**
• **Palanki, Ravi**
**San Diego, CA California 92121-1714 (US)**

(74) Representative: **Tomkins & Co**
**5 Dartmouth Road**
**Dublin 6 (IE)**

(56) References cited:
**EP-A1- 1 496 632**     **EP-A1- 3 288 206**
**WO-A2-2006/069176**     **US-A1- 2005 111 406**
**US-A1- 2005 190 724**

**Description**

The present application claims priority to provisional U.S. Application Serial No. 60/731,028, entitled "A METHOD AND APPARATUS FOR ACHEVING A FLEXIBLE BANDWIDTH USING GUARD CARRIERS;" filed October 27, 2006, assigned to the assignee hereof.

**BACKGROUND**

**I. Field**

The present disclosure relates generally to communication, and more specifically to techniques for data transmission in a wireless communication system.

**II. Background**

Wireless communication systems are widely deployed to provide various communication services such as voice, video, packet data, messaging, broadcast, etc. These systems may be multiple-access systems capable of supporting communication for multiple users by sharing the available system resources. Examples of such multiple-access systems include Code Division Multiple Access (CDMA) systems, Time Division Multiple Access (TDMA) systems, Frequency Division Multiple Access (FDMA) systems, Orthogonal FDMA (OFDMA) systems, and Single-Carrier FDMA (SC-FDMA) systems.

A wireless communication system is typically designed for a specific bandwidth. Various system parameters such as sample rate, frame duration, etc., may be selected based on the system bandwidth to achieve the desired performance. The system may be deployed in different geographic regions where different bandwidths may be available. Different sets of system parameter values may then be selected for use for the different bandwidths. However, the parameter selection may be a difficult task if a large number of bandwidths are possible. Furthermore, there may be constraints on some parameters, which may make selection of other parameters more difficult or impossible.

There is therefore a need in the art for techniques to flexibly support different bandwidths. US 2005/0190724 discloses methods of transmission of wide bandwidth signals in a network having legacy devices by determining an overlap of legacy channel bandwidth with the bandwidth of the transmission channel. EP-1496632-A1 discloses how to assign a plurality of subcarriers to a data channel and how to assign fewer subcarriers to a control channel.

**SUMMARY**

Techniques to support different bandwidths in a wireless communication system are described herein as set forth in the appended claims. In an aspect, the system supports a configurable operating bandwidth using a fixed design bandwidth and variable guard bands. Values for various parameters such as fast Fourier transform (FFT) size, cyclic prefix length, and sample rate may be selected based on the design bandwidth. The design bandwidth may be associated with K total subcarriers, where K > 1. The operating bandwidth may be associated with N usable subcarriers, where K > N > 1. Different operating bandwidths may be easily supported by selecting different numbers of usable subcarriers. The remaining K- N subcarriers are guard subcarriers that are not used for transmission. A transmitter and a receiver may perform processing for a transmission using the same FFT size, cyclic prefix length, and sample rate regardless of the selected operating bandwidth.

In another aspect, the system may use different operating bandwidths and/or different parameter values for different portions of a transmission. A first operating bandwidth (or a first set of subcarriers) may be used for a first portion of the transmission. A second operating bandwidth (or a second set of subcarriers) may be used for a second portion of the transmission. The first portion may correspond to a preamble, and the second portion may correspond to a main body of the transmission. The first and second portions may be associated with the same or different design bandwidths. Each design bandwidth may be associated with a specific set of parameter values to use for transmission.

Various aspects and features of the disclosure are described in further detail below.

**BRIEF DESCRIPTION OF THE DRAWINGS**

FIG. 1 shows a wireless communication system.
FIG. 2 shows a block diagram of a base station and a terminal.
FIG. 3 shows an OFDM modulator for a fixed operating bandwidth.

FIG. 4 illustrates configurable operating bandwidth and variable guard bands.
FIG. 5A shows a subcarrier structure for a fixed design bandwidth.
FIG. 5B shows a subcarrier structure for a configurable operating bandwidth.
FIG. 6 shows an OFDM modulator for configurable operating bandwidth.
FIG. 7 shows an OFDM demodulator for configurable operating bandwidth
FIGS. 8 and 9 show a process and an apparatus, respectively, for transmission with configurable operating bandwidth.
FIG. 10 shows a super-frame structure.
FIG. 11 shows use of different bandwidths for different portions of a transmission.
FIGS. 12 and 13 show a process and an apparatus, respectively, for transmission with different bandwidths for different portions.

## DETAILED DESCRIPTION

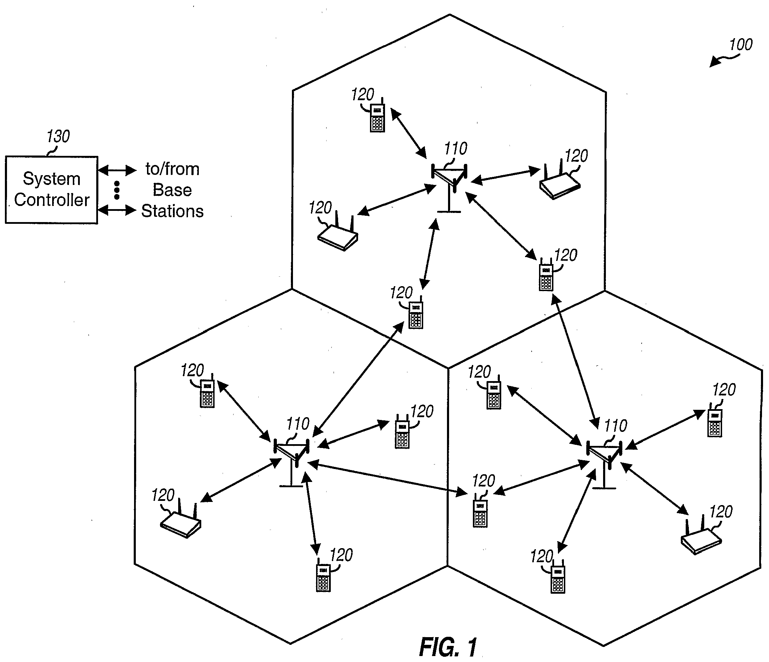

**FIG. 1** shows a wireless communication system 100 with multiple base stations 110. A base station is generally a fixed station that communicates with the terminals and may also be referred to as an access point, a Node B, an enhanced Node B (eNode B), etc. Each base station 110 provides communication coverage for a particular geographic area. The term "cell" can refer to a base station and/or its coverage area depending on the context in which the term is used. To improve system capacity, a base station coverage area may be partitioned into multiple smaller areas, e.g., three smaller areas. Each smaller area may be served by a respective base transceiver subsystem (BTS). The term "sector" can refer to a BTS and/or its coverage area depending on the context in which the term is used. For a sectorized cell, the BTSs for all sectors of that cell are typically co-located within the base station for the cell.

Terminals 120 may be dispersed throughout the system. A terminal may be stationary or mobile and may also be referred to as an access terminal, a mobile station, a user equipment, a mobile equipment, a station, etc. A terminal may be a cellular phone, a personal digital assistant (PDA), a wireless modem, a wireless communication device, a handheld device, a subscriber unit, etc. A terminal may communicate with one or more base stations via the downlink and uplink. The downlink (or forward link) refers to the communication link from the base stations to the terminals, and the uplink (or reverse link) refers to the communication link from the terminals to the base stations.

A system controller 130 may couple to base stations 110 and provide coordination and control for these base stations. System controller 130 may be a single network entity or a collection of network entities. System controller 130 may comprise a Radio Network Controller (RNC), a Mobile Switching Center (MSC), etc.

The techniques described herein may be used for various communication systems such as multiple-access systems (e.g., CDMA, FDMA, TDMA, OFDMA, and SC-FDMA systems), broadcast systems, wireless local area networks (WLANs), etc. The terms "systems" and "networks" are often used interchangeably. OFDMA systems and some broadcast systems utilize Orthogonal Frequency Division Multiplexing (OFDM). SC-FDMA systems utilize Single-Carrier Frequency Division Multiplexing (SC-FDM). OFDM and SC-FDM partition the system bandwidth into multiple (K) orthogonal subcarriers, which are also commonly referred to as tones, subbands, bins, etc. Each subcarrier may be modulated with data. OFDM sends modulation symbols in the frequency domain on the subcarriers whereas SC-FDM sends modulation symbols in the time domain on the subcarriers. For clarity, the techniques are described below for an OFDM-based system, which is a system that utilizes OFDM. An OFDM-based system may be an OFDMA system, a broadcast system, a system utilizing multiple radio technologies (e.g., OFDM on the downlink and CDMA on the uplink), etc.

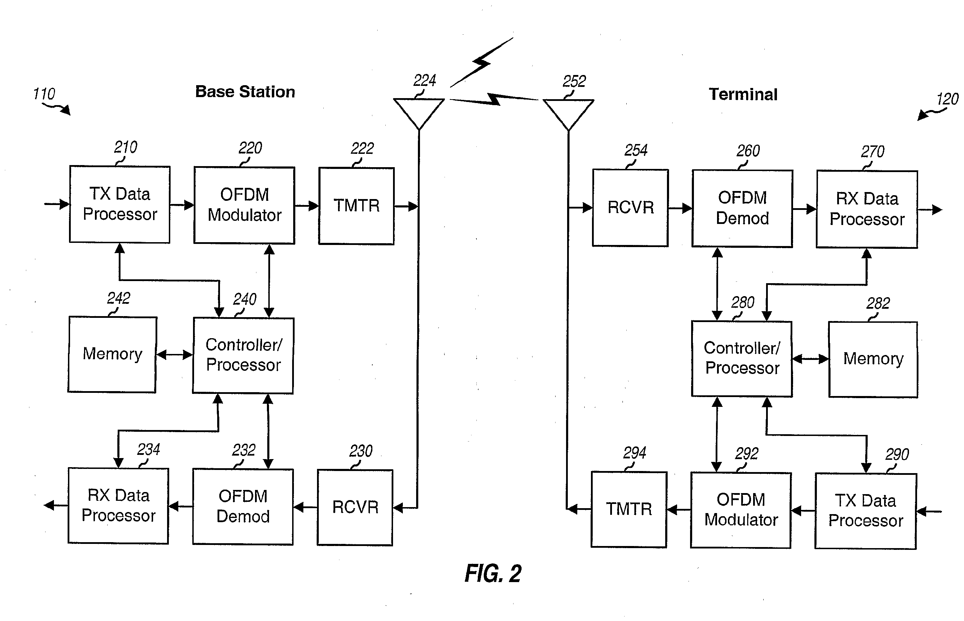

**FIG. 2** shows a block diagram of a base station 110 and a terminal 120, which are one of the base stations and one of the terminals in FIG. 1. At base station 110, a transmit (TX) data processor 210 receives different types of data such as, e.g., traffic data from a data source (not shown) and signaling from a controller/processor 240. As used herein, "data" generically refers to any type of data such as, e.g., traffic data, signaling, overhead data, control data, pilot, broadcast data, messages, etc. Processor 210 processes (e.g., formats, encodes, interleaves, and symbol maps) the different types of data and provides modulation symbols. An OFDM modulator 220 processes the modulation symbols for OFDM and provides output samples or chips. A transmitter (TMTR) 222 processes (e.g., converts to analog, amplifies, filters, and frequency upconverts) the output samples and generates a downlink signal, which is transmitted via an antenna 224.

At terminal 120, an antenna 252 receives the downlink signals from base station 110 and possibly other base stations and provides a received signal to a receiver (RCVR) 254. Receiver 254 conditions (e.g., filters, amplifies, frequency downconverts, and digitizes) the received signal and provides received samples. An OFDM demodulator (Demod) 260 processes the received samples for OFDM and provides received symbols. A receive (RX) data processor 270 processes (e.g., detects, symbol demaps, deinterleaves, and decodes) the received symbols and provides decoded data for terminal 120.

On the uplink, at terminal 120, data is processed by a TX data processor 290, modulated by an OFDM modulator 292, conditioned by a transmitter 294, and transmitted via antenna 252. At base station 110, the uplink signals from terminal 120 and other terminals are received by antenna 224, conditioned by a receiver 230, demodulated by an OFDM demodulator 232, and processed by an RX data processor 234 to recover data sent by the terminals. In general, the processing for uplink transmission may be similar to or different from the processing for downlink transmission.

Controllers 240 and 280 direct the operations at base station 110 and terminal 120, respectively. Memories 242 and 282 store data and program codes for base station 110 and terminal 120, respectively.

An OFDM-based system typically partitions a total bandwidth of W Hertz into K total subcarriers. K is typically a power of two in order to enable faster processing by using fast Fourier transform (FFT) and inverse FFT (IFFT) operations. K modulation symbols may be sent on the K total subcarriers, one modulation symbol per subcarrier, in each OFDM symbol period.

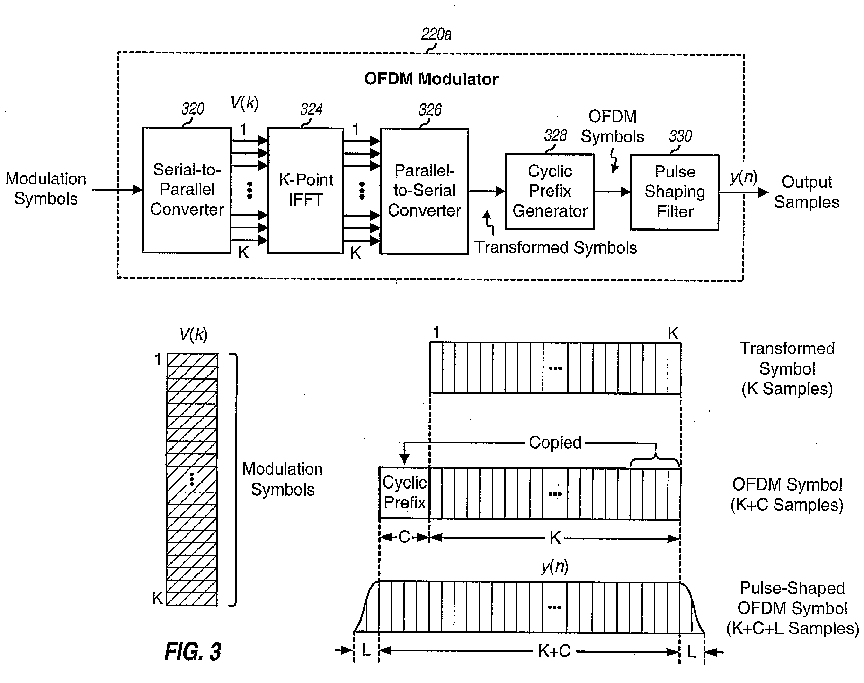

FIG. 3 shows a block diagram of an OFDM modulator 220a, which may be used for OFDM modulators 220 and 292 in FIG. 2. Within OFDM modulator 220a, a serial-to-parallel converter 320 receives modulation symbols for data (e.g., traffic data, signaling, pilot, etc.) and maps these modulation symbols to the K total subcarriers. The mapped modulation symbols are denoted as $V(k)$, where $k$ is an index for subcarriers. An IFFT unit 324 receives K modulation symbols for the K total subcarriers in each OFDM symbol period, transforms the K modulation symbols to the time domain with a K-point IFFT, and provides a transformed symbol containing K time-domain samples. Each time-domain sample is a complex value to be transmitted in one sample period. A parallel-to-serial converter 326 serializes the K samples of each transformed symbol.

A cyclic prefix generator 328 cyclically/circularly repeats a portion (or C samples) of each transformed symbol to form an OFDM symbol containing K + C samples. The repeated portion is referred to as a cyclic prefix or a guard interval, and C is the cyclic prefix length. The cyclic prefix is used to combat inter-symbol interference (ISI) caused by frequency selective fading, which is a frequency response that varies across the system bandwidth.

A filter 330 performs pulse shaping or windowing on the OFDM symbols from cyclic prefix generator 328. Filter 330 cyclically repeats L samples in front and L samples in back of each OFDM symbol. Filter 330 then filters each extended OFDM symbol in accordance with a desired impulse response to obtain filtered samples for the OFDM symbol. The pulse shaping ensures that the filtered samples conform to a spectral emission mask imposed on the system. Filter 330 then overlaps the pulse-shaped OFDM symbols such that the last L filtered samples of each OFDM symbol overlap the first L filtered samples of the next OFDM symbol. Filter 330 then sums the filtered samples for each sample period and provides the output samples, which are denoted as $y(n)$ where $n$ is an index for sample period. Because of the overlap-and-add operation, each OFDM symbol after pulse shaping contains K + C + L samples. An OFDM symbol period is the duration of one OFDM symbol and is equal to K + C + L sample periods.

As shown in FIG. 3, a transmitter may send K modulation symbols in the frequency domain on the K total subcarriers in each OFDM symbol period. The transmitter may convert the K modulation symbols to the time-domain with an IFFT to generate K time-domain samples. A cyclic prefix of length C and a window of length L may also be appended. This digital sequence of K + C + L samples may then be converted to an analog waveform with a digital-to-analog converter (DAC). The DAC may be operated at a sample rate of W, and the spacing between samples may be 1/W seconds. A receiver may obtain digital samples by sampling an analog received signal every 1/W seconds.

The duration of an OFDM symbol is denoted as $T_{OFDM}$ and may be given as:

$$T_{OFDM} = (K + C + L) / W \ . \qquad\qquad\qquad Eq\ (1)$$

Since an OFDM symbol is a basic unit of transmission in an OFDM-based system, time intervals in the system are typically given in units of $T_{OFDM}$. For example, a data packet may be encoded and sent in a frame spanning $N_{FRAME}$ OFDM symbols. The transmission time for this packet would be at least $N_{FRAME} \cdot T_{OFDM}$ seconds. The time interval between the start of transmission of a data packet and the end of reception of that data packet is often referred to as latency. It is easy to see that latencies in an OFDM-based system depend directly on $T_{OFDM}$.

As shown in equation (1), $T_{OFDM}$ is typically a function of bandwidth W. Therefore, OFDM-based systems designed for different bandwidths may have different latencies. This may not be desirable since some applications have strict latency requirements that do not depend on bandwidth. In order to ensure similar latencies for different bandwidths, certain system parameters such as FFT size, frame duration, etc., may be defined as a function of bandwidth. However, this parameter selection may be a difficult task, especially if there is a large number of possible bandwidth allocations. Furthermore, there may be constraints on FFT sizes, frame durations, etc., which may make the parameter selection more difficult or impossible.

The sample rate at a receiver is typically equal to an integer multiple of the bandwidth W. Different sample rates may be used for different bandwidths. This may be disadvantageous since hardware (e.g., analog-to-digital converters) may need to be designed to support different sample rates.

In an aspect, an OFDM-based system flexibly supports different bandwidths by using a fixed design bandwidth and variable guard bands. This allows the system to use the same sample rate and offer similar latencies for all supported bandwidths.

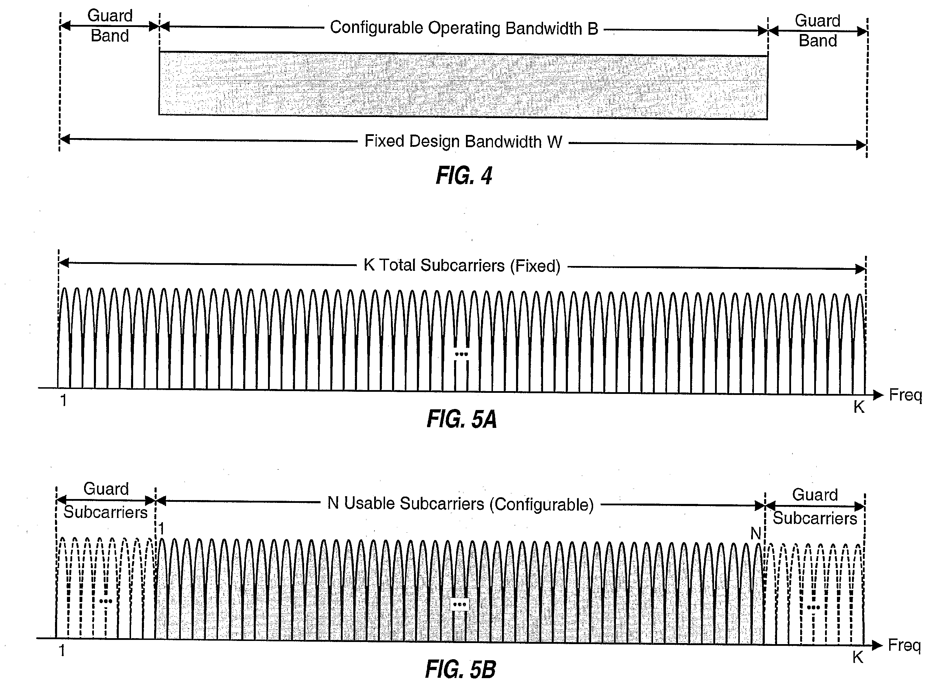

**FIG. 4** illustrates the use of variable guard bands to support different bandwidths. The OFDM-based system is designed for a fixed bandwidth of W Hertz. The system supports a configurable operating bandwidth of B Hertz by using one or more guard bands at one or both ends of the operating bandwidth. The operating bandwidth B may be any bandwidth that is less than or equal to the design bandwidth W, or B≤W.

**FIG. 5A** shows a subcarrier structure for the design bandwidth W. The design bandwidth is partitioned into K total subcarriers, which may be assigned indices of 1 through K. Since the design bandwidth is fixed, the total number of subcarriers is also fixed.

**FIG. 5B** shows a subcarrier structure for the operating bandwidth B. The operating bandwidth may occupy all or a portion of the design bandwidth. The subcarriers within the operating bandwidth are referred to as usable subcarriers, and the subcarriers outside of the operating bandwidth are referred to as guard subcarriers. A usable subcarrier is a subcarrier that may be modulated with data. A guard subcarrier is a subcarrier that is modulated with a signal value of zero, so that no power is transmitted on the guard subcarrier. The number of usable subcarriers, N, may be given as follows:

$$N = K \cdot B / W \ . \qquad\qquad\qquad\qquad Eq\ (2)$$

The number of guard subcarriers, G, may be given as G = K - N .

As shown in FIGS. 4 and 5B, the OFDM-based system can support different bandwidths up to W Hertz by using variable guard bands/subcarriers. For example, the system may be designed for a bandwidth of 10 MHz. The system may be deployed with an operating bandwidth of 8 MHz by using 1 MHz guard band on each of the two sides of the 8 MHz operating bandwidth. In general, the left and right guard bands may be selected based on the operating bandwidth B and the design bandwidth W. The left and right guard bands may or may not have equal lengths.

Using variable guard bands/subcarriers, the OFDM-based system can support different bandwidths with a single sample rate and offer similar latencies for all supported bandwidths. A sample rate of 1/W may be used for the system, and the OFDM symbol duration may be given as shown in equation (1). The quantities on the right hand side of equation (1) are independent of the operating bandwidth B. Hence, the OFDM symbol period $T_{OFDM}$ and latencies are independent of the operating bandwidth B.

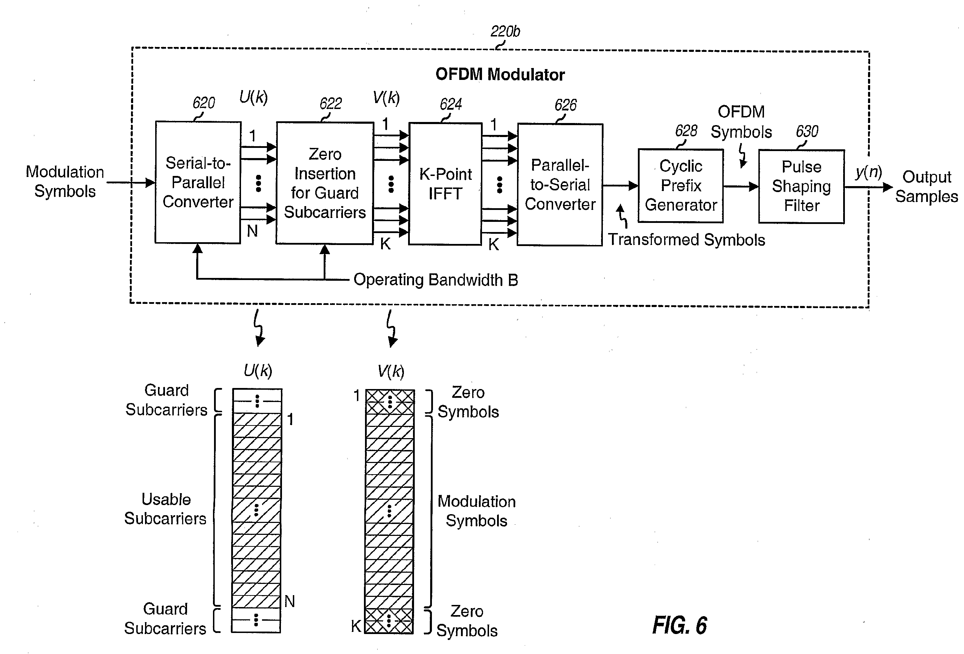

**FIG. 6** shows a block diagram of a design of an OFDM modulator 220b for configurable operating bandwidth. OFDM modulator 220b may also be used for OFDM modulators 220 and 292 in FIG. 2. Within OFDM modulator 220b, a serial-to-parallel converter 620 receives modulation symbols for data (e.g., traffic data, signaling, pilot, etc.) and maps these modulation symbols to the N usable subcarriers. The mapped modulation symbols are denoted as $U(k)$. A zero insertion unit 622 inserts a zero symbol on each guard subcarrier and provides K transmit symbols in each OFDM symbol period. A zero symbol is a signal value of zero. Each transmit symbol may be a modulation symbol for data or a zero symbol. The transmit symbols are denoted as $V(k)$. The mapping to N usable subcarriers by unit 620 and the zero insertion by unit 622 may be performed based on the operating bandwidth B.

An IFFT unit 624 receives K transmit symbols for the K total subcarriers in each OFDM symbol period, transforms the K transmit symbols to the time domain with a K-point IFFT, and provides K time-domain samples. The K samples of each transformed symbol are serialized by a parallel-to-serial converter 626, appended with a cyclic prefix by a cyclic prefix generator 628, and filtered by a pulse-shaping filter 630 to generate a pulse-shaped OFDM symbol.

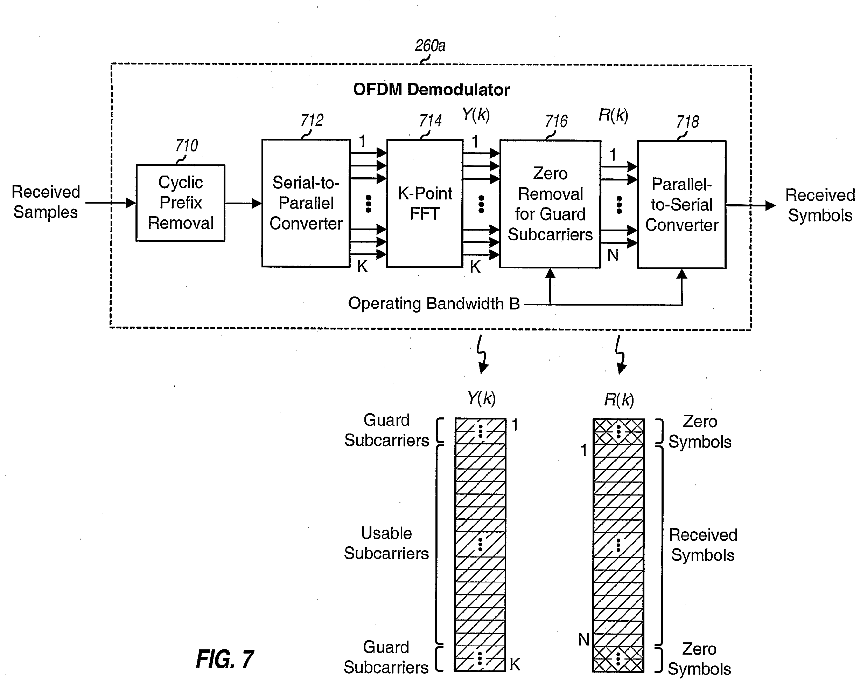

**FIG. 7** shows a block diagram of a design of an OFDM demodulator 260a for configurable operating bandwidth. OFDM demodulator 260a may be used for OFDM demodulators 260 and 232 in FIG. 2. Within OFDM demodulator 260a, a cyclic prefix removal unit 710 obtains K + C + L received samples in each OFDM symbol period, removes C samples for the cyclic prefix and L samples for the pulse shaping window, and provides K received samples for the OFDM symbol period. A serial-to-parallel converter 712 provides the K received samples in parallel form. An FFT unit 714 transforms the K received samples to the frequency domain with a K-point FFT and provides K received symbols for the K total subcarriers. The received symbols from FFT unit 714 are denoted as $Y(k)$.

A zero removal unit 716 obtains K received symbols in each OFDM symbol period, removes the received symbols from the G guard subcarriers, and provides N received symbols from the N usable subcarriers. The received symbols from unit 716 are denoted as $R(k)$. A parallel-to-serial converter 728 serializes the N received symbols of each OFDM symbol from unit 716. The zero removal by unit 716 and the parallel-to-serial conversion by unit 718 may be performed based on the operating bandwidth B.

An OFDM-based system may have a single design bandwidth W and may use specific values for parameters such as FFT size K, cyclic prefix length C, window length L, and sample rate W. Different operating bandwidths up to W may be supported using these fixed parameter values for K, C, L and sample rate.

An OFDM-based system may also have more than one design bandwidth and may use a specific set of values for K, C, L, and sample rate for each design bandwidth. Different sets of parameter values may be selected for different design bandwidths, e.g., to achieve the same or similar latencies for all design bandwidths. For example, an OFDM-based system may be designed for bandwidths of 5 MHz and 10 MHz using FFT sizes of 512 and 1024, respectively. The 5 MHz design bandwidth may be used to support operating bandwidths up to 5 MHz, or $B \leq 5$ MHz. The 10 MHz design bandwidth may be used to support operating bandwidths from 5 to 10 MHz, or 5 MHz $< B \leq 10$ MHz. In general, any number of design bandwidths may be supported, and any set of parameter values may be used for each design bandwidth. Each design bandwidth may support an associated range of operating bandwidths up to that design bandwidth.

Variable guard bands may be used to support different operating bandwidths, as described above. Variable guard bands may also be used to support different spectral emission masks. A spectral emission mask specifies the allowed output power levels at different frequencies. A more stringent spectral emission mask may require the output power level to be attenuated more at certain frequencies. The impulse response of the pulse-shaping filter is typically fixed to simplify the transmitter design. More guard subcarriers may be used in order to meet more stringent spectral emission mask requirements.

Variable guard bands may also be used to avoid interference from other transmitters. For example, a base station in an OFDM-based system may observe high levels of interference from other transmitters in other systems. The base station may adjust its operating bandwidth in order to avoid using subcarriers with high levels of interference. These subcarriers may be made guard subcarriers and not used for transmission.

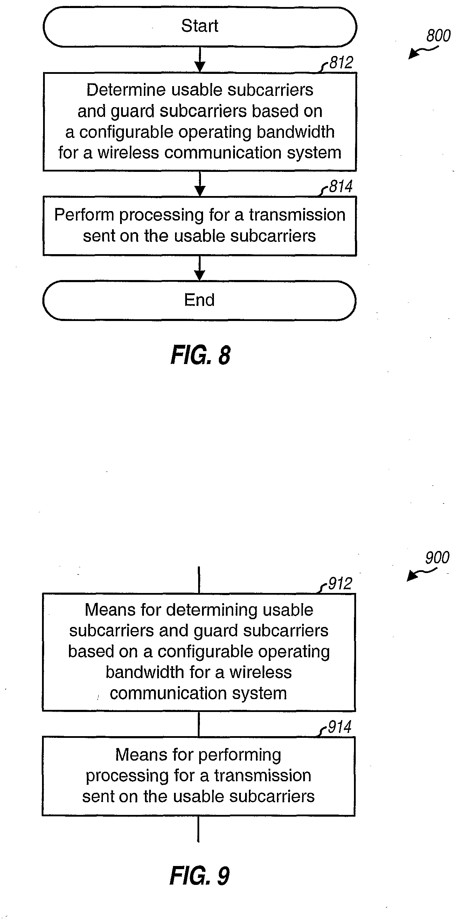

**FIG. 8** shows a process 800 for transmission with configurable operating bandwidth. Process 800 may be performed by a transmitter (e.g., a base station for downlink transmission) or a receiver (e.g., a terminal for downlink transmission). Usable subcarriers and guard subcarriers are determined based on a configurable operating bandwidth for a wireless communication system (block 812). The operating bandwidth may be selected based on, e.g., the bandwidth available for the system, a spectral emission mask for the system, etc. The determination in block 812 may be made based on signaling, control registers, hardwired logic, software commands, etc. The system may be associated with a design bandwidth corresponding to K total subcarriers. The operating bandwidth may correspond to N usable subcarriers, where $K \geq N > 1$. The N usable subcarriers may be centered among the K total subcarriers, and the guard subcarriers may be evenly distributed on both sides of the operating bandwidth. Other arrangements of usable and guard subcarriers are also possible. Processing is performed for a transmission sent on the usable subcarriers (block 814). The transmission may comprise traffic data, signaling, pilot, etc.

Process 800 may be performed by a transmitter. In this case, for block 814, modulation symbols may be mapped to the usable subcarriers, and zero symbols may be mapped to the guard subcarriers. OFDM symbols may be generated based on the mapped modulation symbols and zero symbols. The OFDM symbols may be generated further based on an FFT size and a cyclic prefix length that may be independent of the operating bandwidth. Output samples may be generated at a sample rate that may be independent of the operating bandwidth.

Process 800 may also be performed by a receiver. In this case, for block 814, received samples may be obtained at a sample rate that may be independent of the operating bandwidth and processed (e.g., OFDM demodulated) to obtain received symbols for the K total subcarriers. Received symbols from the usable subcarriers may be retained, and received symbol from the guard subcarriers may be discarded. The received symbols from the usable subcarriers may be processed (e.g., symbol demapped, deinterleaved, and decoded) to recover data sent in the transmission.

The operating bandwidth may be selected from multiple bandwidths associated with different numbers of guard subcarriers and a fixed OFDM symbol duration. OFDM symbols for different operating bandwidths may be generated by keeping the same OFDM symbol duration but changing the number of guard subcarriers.

The system may be associated with a single design bandwidth. The operating bandwidth may be selected from a range of bandwidths supported by the design bandwidth. The processing in block 814 may be performed based on a set of parameter values for the design bandwidth. Alternatively, the system may be associated with multiple design bandwidths. Each design bandwidth may support a respective range of operating bandwidths. The processing in block 814 may be performed based on a set of parameter values for a design bandwidth supporting the operating bandwidth selected for use.

**FIG. 9** shows a design of an apparatus 900 for transmission with configurable operating bandwidth. Apparatus 900 includes means for determining usable subcarriers and guard subcarriers based on a configurable operating bandwidth for a wireless communication system (for example module 912), and means for performing processing for a transmission sent on the usable subcarriers (for example module 914). Modules 912 and 914 may comprise processors, electronics devices, hardware devices, electronics components, logical circuits, memories, etc., or any combination thereof.

In another aspect, an OFDM-based system may use different operating bandwidths and/or different parameter values for different portions of a transmission. The system may employ a preamble comprising one or more OFDM symbols and a main body comprising any number of OFDM symbols. The preamble may carry information used to demodulate and decode the transmission sent in the main body. The main body may carry traffic data and/or other types of data. Different operating bandwidths and/or parameter values may be used for the preamble and main body.

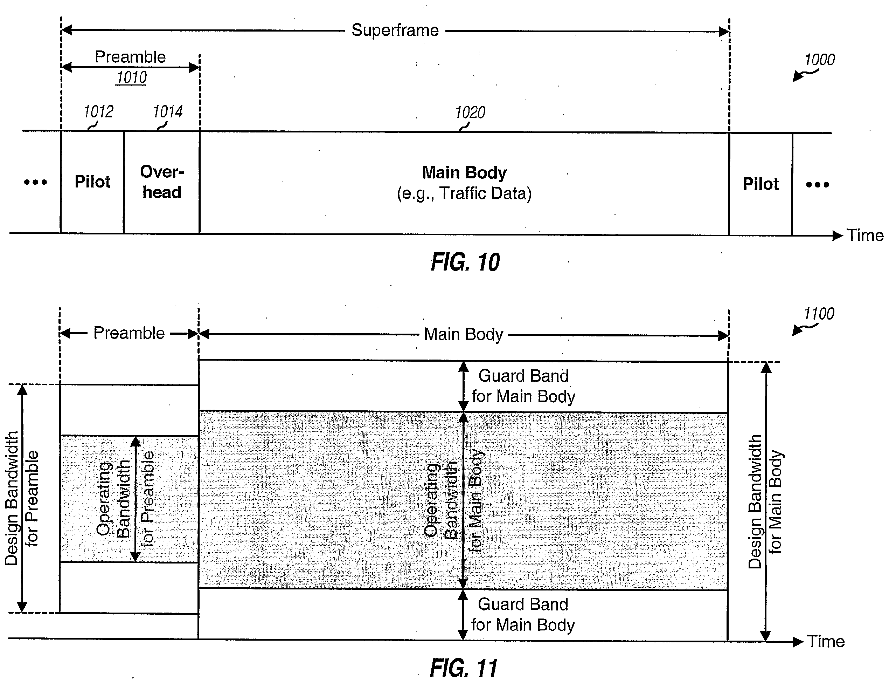

**FIG. 10** shows a super-frame structure 1000 that may be used for an OFDM-based system. The timeline for transmission in the system may be divided into super-frames. Each super-frame may have a predetermined time duration. A super-frame may also be referred to as a frame, a slot, or some other terminology. In the design shown in FIG. 10, each super-frame includes a preamble 1010 and a main body 1020. Preamble 1010 includes a pilot field 1012 and an overhead field 1014.

Pilot field 1012 may carry pilot and/or other signals used for various purposes such as system detection, time and frequency acquisition, channel estimation, etc. Overhead field 1014 may carry information regarding how data is sent in main body 1020, system information, etc. For example, overhead field 1014 may carry information for parameters such as the operating bandwidth, FFT size, cyclic prefix length, window length, frequency hop sequence, etc., used for main body 1020. Main body 1020 may carry data, e.g., traffic data, signaling, pilot, etc. The three fields 1012, 1014 and 1020 may be time division multiplexed in each super-frame as shown in FIG. 10 in order to facilitate synchronization and data recovery. Pilot field 1012 may be sent first in each super-frame and may be used for detection of overhead field 1014. Information obtained from overhead field 1014 may be used to recover the data sent in main body 1020.

**FIG. 11** shows a design of a structure 1100 with different design bandwidths and different operating bandwidths for different fields. In structure 1100, one design bandwidth $W_P$ and one FFT size $K_P$ may be used for the preamble. Another design bandwidth $W_M$ and another FFT size $K_M$ may be used for the main body. The operating bandwidth $B_P$ and the $N_P$ usable subcarriers for the preamble may be selected based on the design bandwidth $W_P$ and the $K_P$ total subcarriers for the preamble. The operating bandwidth $B_M$ and the $N_M$ usable subcarriers for the main body may be selected based on the design bandwidth $W_M$ and the $K_M$ total subcarriers for the main body. The parameters may be selected, e.g., as follows:

$$W_P \leq W_M, \quad B_P \leq B_M, \text{ and } \quad K_P \leq K_M . \qquad \text{Eq (3)}$$

Different design bandwidths, operating bandwidths, FFT sizes, etc. may also be used for the pilot and overhead fields of the preamble.

Alternatively, one design bandwidth W and one FFT size K may be used for all fields, and different operating bandwidths may be used for different fields. An operating bandwidth of $B_{pilot}$ may be used for the pilot field, an operating bandwidth of $B_{overhead}$ may be used for the overhead field, and an operating bandwidth of $B_{main}$ may be used for the main body. The bandwidths for the various fields may be selected, e.g., as follows:

$$B_{pilot} \leq B_{overhead} \leq B_{main} \leq W . \qquad \text{Eq (4)}$$

The bandwidths for different fields may be conveyed in various manners. In one design, the design bandwidths and operating bandwidths for the pilot field, overhead field, and main body are fixed and known to the terminals *a priori*.

In another design, the design bandwidths for the pilot field, overhead field, and main body are fixed, and the operating bandwidths for the pilot field, overhead field, and/or main body are configurable. The parameter values for each configurable field may be sent in another field. For example, the operating bandwidth and parameter values for the overhead field may be conveyed in the pilot field. The operating bandwidth and parameter values for the main body may be conveyed in the overhead field. A terminal may recover the overhead field based on parameter values known to the terminal *a priori* or conveyed via the pilot field. The terminal may then recover the transmission sent in the main body based on the parameter values obtained from the overhead field.

In yet another design, a small number of predetermined sets of parameter values may be used for a given field, e.g., the pilot field, overhead field, or main body. The terminals have knowledge of the predetermined sets of parameters and may attempt to recover the transmission on this field based on the predetermined parameter sets.

A combination of the above designs may also be used for different fields. For example, a known set of parameter values may be used for the pilot field, a small number of predetermined sets of parameter values may be used for the overhead field, and a configurable set of parameter values may be used for the main body and conveyed in the overhead field. A terminal may recover the pilot based on the known set of parameter values. The terminal may recover the overhead based on the predetermined sets of parameter values and obtain the configurable set of parameter values for the main body. The terminal may then recover the transmission sent in the main body based on the configurable set of parameter values.

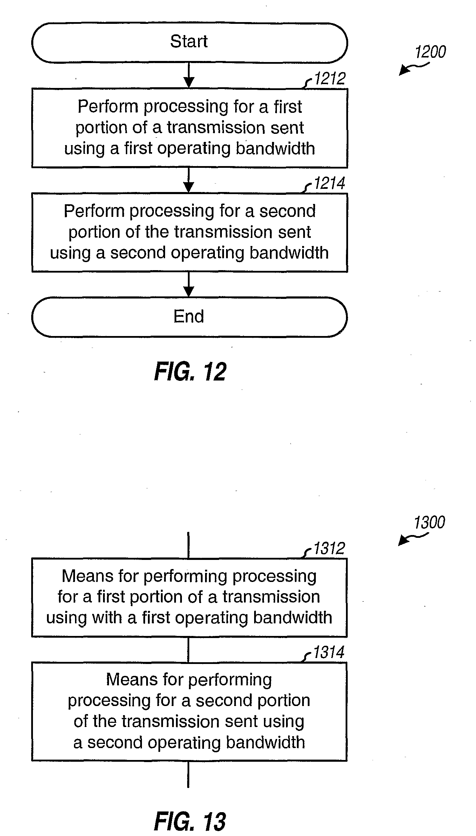

**FIG. 12** shows a design of a process 1200 that may be performed by a transmitter or a receiver. Processing is performed for a first portion of a transmission sent using a first operating bandwidth (block 1212). Processing is performed for a second portion of the transmission sent using a second operating bandwidth (block 1214). The first portion may correspond to a preamble, and the second portion may correspond to a main body of the transmission.

Process 1200 may be performed by a transmitter. In this case, signaling may be sent on the first set of subcarriers used for the first portion of the transmission and determined based on the first operating bandwidth. Data may be sent on the second set of subcarriers used for the second portion of the transmission and determined based on the second operating bandwidth. The signaling may comprise information for parameters for the second portion of the transmission. The parameters may comprise the second operating bandwidth, an FFT size, a cyclic prefix length, a frequency hopping sequence, etc.

Process 1200 may also be performed by a receiver. In this case, signaling may be received from the first set of subcarriers, and data may be received from the second set of subcarriers. The signaling may be processed to obtain information for parameters for the second portion of the transmission. The second portion of the transmission may be processed based on the information obtained from the signaling.

In one design, the first and second operating bandwidths are selected from a set of operating bandwidths available for both the first and second portions. In another design, the first operating bandwidth is selected from a first set of operating bandwidths available for the first portion. The second operating bandwidth is selected from a second set of operating bandwidths available for the second portion.

In one design, the first and second portions are associated with one design bandwidth. The processing for the first and second portions may be based on a set of parameter values for this design bandwidth. In another design, the first and second portions are associated with first and second design bandwidths, respectively. The processing for the first portion may be based on a first set of parameter values for the first design bandwidth. The processing for the second portion may be based on a second set of parameter values for the second design bandwidth. A first set of design bandwidths may be applicable for the first portion, and a second set of design bandwidths may be applicable for the second portion. The first and second design bandwidths may be selected from the first and second sets, respectively.

The first portion may be associated with fewer design bandwidths and/or fewer operating bandwidths than the second portion. This may reduce the number of hypotheses to evaluate to recover the transmission sent in the first portion.

FIG. 13 shows a design of an apparatus 1300 for transmission. Apparatus 1300 includes means for performing processing for a first portion of a transmission sent using a first operating bandwidth (for example module 1312), and means for performing processing for a second portion of the transmission sent using a second operating bandwidth (for example module 1314). Modules 1312 and 1314 may comprise processors, electronics devices, hardware devices, electronics components, logical circuits, memories, etc., or any combination thereof.

The transmission techniques described herein may be implemented by various means. For example, the techniques may be implemented in hardware, firmware, software, or a combination thereof. For a hardware implementation, the processing units at an entity (e.g., a base station or a terminal) may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, the techniques may be implemented with modules (e.g., procedures, functions, and so on) that perform the functions described herein. The firmware and/or software codes may be stored in a memory (e.g., memory 242 or 282 in FIG. 2) and executed by a processor (e.g., processor 240 or 280). The memory may be implemented within the processor or external to the processor.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples described herein but is to be accorded the widest scope consistent with the principles and novel features disclosed herein.

## Claims

1. An apparatus comprising:

   means for performing processing (1212) for a first portion of a frame to be transmitted corresponding to a preamble of the frame and sent using a first operating bandwidth based on a first set of parameter values for a first design bandwidth applicable to the first portion; and

   means for performing processing (1214) for a second portion of the frame to be transmitted corresponding to a main body of the frame and sent using a second operating bandwidth based on a second set of parameter values for a second design bandwidth applicable to the second portion;and

   means for sending signaling on a first set of subcarriers used for the first portion of the frame to be transmitted

EP 2 592 804 B1

and determined based on the first operating bandwidth; and

means for sending data on a second set of subcarriers used for the second portion of the frame to be transmitted and determined based on the second operating bandwidth; and

wherein the means for performing processing for the first portion comprises means for processing the signaling to obtain information for the second set of parameter values for the second portion of the frame to be transmitted.

2. The apparatus of claim 1, wherein the first operating bandwidth is smaller than the second operating bandwidth.

3. The apparatus of claim 1, wherein the second set of parameters comprise the second operating bandwidth, a fast Fourier transform (FFT) size, a cyclic prefix length, a frequency hopping sequence, or a combination thereof.

4. The apparatus of claim 1, wherein the means for performing processing for the first portion comprises means for processing the signaling to obtain information for parameters for the second portion of the frame to be transmitted, and wherein the means for performing processing for the second portion comprises means for processing the second portion of the frame to be transmitted based on the information obtained from the signaling.

5. The apparatus of claim 1, comprising means for performing processing for the first and second portions of the frame to be transmitted based on a set of parameter values for a design bandwidth applicable to the first and second portions.

6. The apparatus of claim 1, wherein the first design bandwidth is in a first set of design bandwidths applicable for the first portion and the second design bandwidth is in a second set of design bandwidths applicable for the second portion, the first set including fewer design bandwidths than the second set.

7. The apparatus of claim 1, wherein the first operating bandwidth is selected from a first set of operating bandwidths available for the first portion, and wherein the second operating bandwidth is selected from a second set of operating bandwidths available for the second portion.

8. The apparatus of claim 7, wherein the first set includes fewer operating bandwidths than the second set.

9. A method comprising:

performing processing (1212) for a first portion of a frame to be transmitted corresponding to a preamble and sent using a first operating bandwidth based on a first set of parameter values for a first design bandwidth applicable to the first portion; and

performing processing (1214) for a second portion of the frame to be transmitted corresponding to a main body of the framesent using a second operating bandwidth based on a second set of parameter values for a second design bandwidth applicable to the second portion; and

sending signaling on a first set of subcarriers used for the first portion of the transmitted frame and determined based on the first operating bandwidth; and

sending data on a second set of subcarriers used for the second portion of the transmitted frame and determined based on the second operating bandwidth; and

wherein the performing processing for the first portion comprises processing the signaling to obtain information for the second set of parameter values for the second portion of the frame to be transmitted.

10. The method of claim 9, wherein the performing processing for the second portion comprises processing the second portion of the frame to be transmitted based on the information obtained from the signaling.

11. A computer-readable medium comprising instructions which when executed by a processor cause the processor to perform a method according to claims 9 or 10.

**Patentansprüche**

1. Eine Vorrichtung, aufweisend:

Mittel zum Durchführen einer Verarbeitung (1212) für einen ersten Teil eines Rahmens, der in Entsprechung zu einer Präambel des Rahmens zu übertragen und unter Verwendung einer ersten Betriebsbandbreite zu senden ist, basierend auf einem ersten Satz von Parameterwerten für eine auf den ersten Teil anwendbare

9

erste Designbandbreite, und

Mittel zum Durchführen einer Verarbeitung (1214) für einen zweiten Teil des Rahmens, der in Entsprechung zu einem Hauptkörper des Rahmens zu übertragen und unter Verwendung einer zweiten Betriebsbandbreite zu senden ist, basierend auf einem zweiten Satz von Parameterwerten für eine auf den zweiten Teil anwendbare zweite Designbandbreite, und

Mittel zum Senden einer Signalisierung auf einem ersten Satz von Subträgern, der für den zu übertragenden ersten Teil des Rahmens verwendet wird und basierend auf der ersten Betriebsbandbreite bestimmt wird, und

Mittel zum Senden von Daten auf einem zweiten Satz von Subträgern, der für den zu übertragenden zweiten Teil des Rahmens verwendet wird und basierend auf der zweiten Betriebsbandbreite bestimmt wird,

wobei die Mittel zum Durchführen einer Verarbeitung für den ersten Teil Mittel zum Verarbeiten der Signalisierung aufweisen, um Informationen für den zweiten Satz von Parameterwerten für den zu übertragenden zweiten Teil des Rahmens zu erhalten.

2. Vorrichtung nach Anspruch 1, wobei die erste Betriebsbandbreite kleiner ist als die zweite Betriebsbandbreite.

3. Vorrichtung nach Anspruch 1, wobei der zweite Satz von Parametern die zweite Betriebsbandbreite, eine Fast-Fourier-Transformation (FFT)-Größe, eine Zyklisches-Präfix-Länge, eine Frequenzsprungsequenz oder eine Kombination aus diesen aufweist.

4. Vorrichtung nach Anspruch 1, wobei die Mittel zum Durchführen einer Verarbeitung für den ersten Teil Mittel zum Verarbeiten der Signalisierung aufweisen, um Informationen für Parameter für den zu übertragenden zweiten Teil des Rahmens zu erhalten, und wobei die Mittel zum Durchführen einer Verarbeitung für den zweiten Teil Mittel zum Verarbeiten des zu übertragenden zweiten Teils des Rahmens basierend auf den aus der Signalisierung erhaltenen Informationen aufweisen.

5. Vorrichtung nach Anspruch 1, die Mittel zum Durchführen einer Verarbeitung für die zu übertragenden ersten und zweiten Teile des Rahmens basierend auf einem Satz von Parameterwerten für eine auf die ersten und zweiten Teile anwendbaren Designbandbreite aufweist.

6. Vorrichtung nach Anspruch 1, wobei die erste Designbandbreite in einem für den ersten Teil anwendbaren ersten Satz von Designbandbreiten enthalten ist und die zweite Designbandbreite in einem für den zweiten Teil anwendbaren zweiten Satz von Designbandbreiten enthalten ist, wobei der erste Satz weniger Designbandbreiten enthält als der zweite Satz.

7. Vorrichtung nach Anspruch 1, wobei die erste Betriebsbandbreite aus einem für den ersten Teil verfügbaren ersten Satz von Betriebsbandbreiten ausgewählt ist und wobei die zweite Betriebsbandbreite aus einem für den zweiten Teil verfügbaren zweiten Satz von Betriebsbandbreiten ausgewählt ist.

8. Vorrichtung nach Anspruch 7, wobei der erste Satz weniger Betriebsbandbreiten enthält als der zweite Satz.

9. Ein Verfahren, aufweisend:

Durchführen einer Verarbeitung (1212) für einen ersten Teil eines Rahmens, der in Entsprechung zu einer Präambel zu übertragen und unter Verwendung einer ersten Betriebsbandbreite zu senden ist, basierend auf einem ersten Satz von Parameterwerten für eine auf den ersten Teil anwendbare erste Designbandbreite, und

Durchführen einer Verarbeitung (1214) für einen zweiten Teil des Rahmens, der in Entsprechung zu einem Hauptkörper des Rahmens zu übertragen und unter Verwendung einer zweiten Betriebsbandbreite zu senden ist, basierend auf einem zweiten Satz von Parameterwerten für eine auf den zweiten Teil anwendbare zweite Designbandbreite, und

Senden einer Signalisierung auf einem ersten Satz von Subträgern, der für den zu übertragenden ersten Teil des Rahmens verwendet wird und basierend auf der ersten Betriebsbandbreite bestimmt wird, und

Senden von Daten auf einem zweiten Satz von Subträgern, der für den zu übertragenden zweiten Teil des Rahmens verwendet wird und basierend auf der zweiten Betriebsbandbreite bestimmt wird,

wobei das Durchführen einer Verarbeitung für den ersten Teil das Verarbeiten der Signalisierung aufweist, um Informationen für den zweiten Satz von Parameterwerten für den zu übertragenden zweiten Teil des Rahmens zu erhalten.

10. Verfahren nach Anspruch 9, wobei das Durchführen einer Verarbeitung für den zweiten Teil das Verarbeiten des zu übertragenden zweiten Teils des Rahmens basierend auf den aus der Signalisierung erhaltenen Informationen aufweist.

11. Ein computerlesbares Medium mit Befehlen, die bei einer Ausführung durch einen Prozessor veranlassen, dass der Prozessor ein Verfahren gemäß den Ansprüchen 9 oder 10 durchführt.

**Revendications**

1. Appareil comprenant :

des moyens pour effectuer un traitement (1212) pour une première partie d'une trame à transmettre correspondant à un préambule de la trame et envoyée en utilisant une première largeur de bande de fonctionnement basée sur un premier ensemble de valeurs de paramètres pour une première largeur de bande de conception applicable à la première partie ; et
des moyens pour effectuer un traitement (1214) pour une deuxième partie de la trame à transmettre correspondant à un corps principal de la trame et envoyée en utilisant une deuxième largeur de bande de fonctionnement basée sur un deuxième ensemble de valeurs de paramètres pour une deuxième largeur de bande de conception applicable à la deuxième partie ; et
des moyens pour envoyer une signalisation sur un premier ensemble de sous-porteuses utilisé pour la première partie de la trame à transmettre et déterminé sur la base de la première largeur de bande de fonctionnement ; et
des moyens pour envoyer des données sur un deuxième ensemble de sous-porteuses utilisé pour la deuxième partie de la trame à transmettre et déterminé sur la base de la deuxième largeur de bande de fonctionnement ; et
dans lequel les moyens pour effectuer un traitement pour la première partie comprennent des moyens pour traiter la signalisation afin d'obtenir des informations pour le deuxième ensemble de valeurs de paramètres pour la deuxième partie de la trame à transmettre.

2. Appareil selon la revendication 1, dans lequel la première largeur de bande de fonctionnement est inférieure à la deuxième largeur de bande de fonctionnement.

3. Appareil selon la revendication 1, dans lequel le deuxième ensemble de paramètres comprend la deuxième largeur de bande de fonctionnement, une taille de transformée de Fourier rapide (FFT), une longueur de préfixe cyclique, une séquence de sauts de fréquence ou une combinaison de celles-ci.

4. Appareil selon la revendication 1, dans lequel les moyens pour effectuer un traitement pour la première partie comprennent des moyens pour traiter la signalisation afin d'obtenir des informations pour des paramètres pour la deuxième partie de la trame à transmettre, et dans lequel les moyens pour effectuer un traitement pour la deuxième partie comprennent des moyens pour traiter la deuxième partie de la trame à transmettre sur la base des informations obtenues à partir de la signalisation.

5. Appareil selon la revendication 1, comprenant des moyens pour effectuer un traitement pour les première et deuxième parties de la trame à transmettre sur la base d'un ensemble de valeurs de paramètres pour une largeur de bande de conception applicable aux première et deuxième parties.

6. Appareil selon la revendication 1, dans lequel la première largeur de bande de conception est comprise dans un premier ensemble de largeurs de bande de conception applicables à la première partie, et la deuxième largeur de bande de conception est comprise dans un deuxième ensemble de largeurs de bande de conception applicables pour la deuxième partie, le premier ensemble comprenant moins de largeurs de bande de conception que le deuxième ensemble.

7. Appareil selon la revendication 1, dans lequel la première largeur de bande de fonctionnement est sélectionnée parmi un premier ensemble de largeurs de bande de fonctionnement disponibles pour la première partie, et dans lequel la deuxième largeur de bande de fonctionnement est sélectionnée parmi un deuxième ensemble de largeurs de bande de fonctionnement disponibles pour la deuxième partie.

8. Appareil selon la revendication 7, dans lequel le premier ensemble comprend moins de largeurs de bande de fonctionnement que le deuxième ensemble.

**9.** Procédé comprenant les étapes consistant à :

réaliser un traitement (1212) pour une première partie d'une trame à transmettre correspondant à un préambule et envoyée en utilisant une première largeur de bande de fonctionnement basée sur un premier ensemble de valeurs de paramètres pour une première largeur de bande de conception applicable à la première partie ; et réaliser un traitement (1214) pour une deuxième partie de la trame à transmettre correspondant à un corps principal de la trame envoyée en utilisant une deuxième largeur de bande de fonctionnement sur la base d'un deuxième ensemble de valeurs de paramètres pour une deuxième largeur de bande de conception applicable à la deuxième partie ; et

envoyer de la signalisation sur un premier ensemble de sous-porteuses utilisé pour la première partie de la trame transmise et déterminé sur la base de la première largeur de bande de fonctionnement ; et

envoyer des données sur un deuxième ensemble de sous-porteuses utilisé pour la deuxième partie de la trame transmise et déterminées en fonction de la deuxième largeur de bande de fonctionnement ; et

dans lequel la réalisation du traitement pour la première partie comprend le traitement de la signalisation pour obtenir des informations pour le deuxième ensemble de valeurs de paramètres pour la deuxième partie de la trame à transmettre.

**10.** Procédé selon la revendication 9, dans lequel la réalisation du traitement pour la deuxième partie comprend le traitement de la deuxième partie de la trame à transmettre sur la base des informations obtenues à partir de la signalisation.

**11.** Support lisible par ordinateur comprenant des instructions qui, lorsqu'elles sont exécutées par un processeur, amènent le processeur à exécuter un procédé selon les revendications 9 ou 10.

FIG. 1

**FIG. 2**

EP 2 592 804 B1

**FIG. 3**

Guard
Band |— Configurable Operating Bandwidth B —————————→| Guard
Band

|←——————————————————— Fixed Design Bandwidth W ———————————————————→|

**FIG. 4**

|←——————————————— K Total Subcarriers (Fixed) ———————————————→|

1 · · · K → Freq

**FIG. 5A**

Guard
Subcarriers |— N Usable Subcarriers (Configurable) ————————→| Guard
Subcarriers

1 N

1 · · · · · · · · · K → Freq

**FIG. 5B**

*FIG. 6*

EP 2 592 804 B1

FIG. 7

```
┌─────────────────────────────────────┐
│               Start                  │
└─────────────────────────────────────┘
                    │
                    ▼        ⌐812
┌─────────────────────────────────────┐
│       Determine usable subcarriers   │
│        and guard subcarriers based on│
│       a configurable operating       │
│            bandwidth                 │
│    for a wireless communication      │
│              system                  │
└─────────────────────────────────────┘
                    │
                    ▼        ⌐814
┌─────────────────────────────────────┐
│   Perform processing for a           │
│        transmission                  │
│     sent on the usable subcarriers   │
└─────────────────────────────────────┘
                    │
                    ▼
┌─────────────────────────────────────┐
│               End                    │
└─────────────────────────────────────┘
```

800

**FIG. 8**

900

```
                    │        ⌐912
┌─────────────────────────────────────┐
│     Means for determining usable     │
│   subcarriers and guard subcarriers  │
│    based on a configurable operating │
│        bandwidth for a wireless      │
│         communication system         │
└─────────────────────────────────────┘
                    │        ⌐914
┌─────────────────────────────────────┐
│        Means for performing          │
│      processing for a transmission   │
│     sent on the usable subcarriers   │
└─────────────────────────────────────┘
                    │
```

**FIG. 9**

*FIG. 10*

*FIG. 11*

Start

Perform processing for a first portion of a transmission sent using a first operating bandwidth
/1212

Perform processing for a second portion of the transmission sent using a second operating bandwidth
/1214

End

1200

**FIG. 12**

1300

Means for performing processing for a first portion of a transmission using with a first operating bandwidth
/1312

Means for performing processing for a second portion of the transmission sent using a second operating bandwidth
/1314

**FIG. 13**

**EP 2 592 804 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 60731028 B
- US 20050190724 A
- EP 1496632 A1